# FASCICULE DE BREVET EUROPEEN

(11) **EP 1 700 502 B1**
(45) Date de publication et mention de la délivrance du brevet: **05.09.2007**
(21) Numéro de dépôt: 04805788.9
(22) Date de dépôt: 28.10.2004
(51) Int. Cl.: H04Q 7/32

(54) **PROCÉDÉ DE GÉNÉRATION DE BASE DE TEMPS DANS UN TÉLÉPHONE MOBILE**
VERFAHREN ZUM ERZEUGEN EINER ZEITBASIS IN EINEM MOBILTELEFON
METHOD OF GENERATING A TIME BASE IN A MOBILE TELEPHONE

(30) Priorité: 24.12.2003 FR 0351198
(43) Date de publication de la demande: 13.09.2006
(73) Titulaire: SAGEM Communication, 75015 Paris (FR)
(72) Inventeur: ROMAO, Fernando, F-78360 Montesson (FR)
(74) Mandataire: Camus, Olivier Jean-Claude
(86) Numéro de dépôt international: PCT/FR2004/050545
(87) Numéro de publication internationale: WO 2005/064965

(56) Documents cités:
- US-A- 5 910 944
- US-B1- 6 333 939

## Description

### DOMAINE TECHNIQUE DE L'INVENTION

La présente invention a pour objet un procédé de génération de base de temps dans un téléphone mobile. Plus précisément, l'invention propose une solution pour produire en permanence dans un téléphone mobile une base de temps, dont la production, consomme moins d'énergie que les procédés comparables de l'état de la technique.

Le domaine de l'invention est, d'une façon générale, celui de la téléphonie mobile. Dans ce domaine, il est capital de fournir une base de temps parfaitement précise aux microprocesseurs des téléphones mobiles, notamment afin qu'ils puissent se synchroniser parfaitement sur les réseaux de radiotéléphonie cellulaire dont ils dépendent. La base de temps est fournie, d'une façon générale, par des oscillateurs, par exemple des oscillateurs à quartz. Ainsi, par exemple, dans le cas du GSM, on disposait initialement d'un unique oscillateur fournissant un signal d'horloge à 13 MHz (MégaHertz) pour cadencer le fonctionnement du téléphone. Un tel oscillateur se devait de présenter en permanence une pureté spectrale élevée, et consommait en conséquence une quantité d'énergie non négligeable.

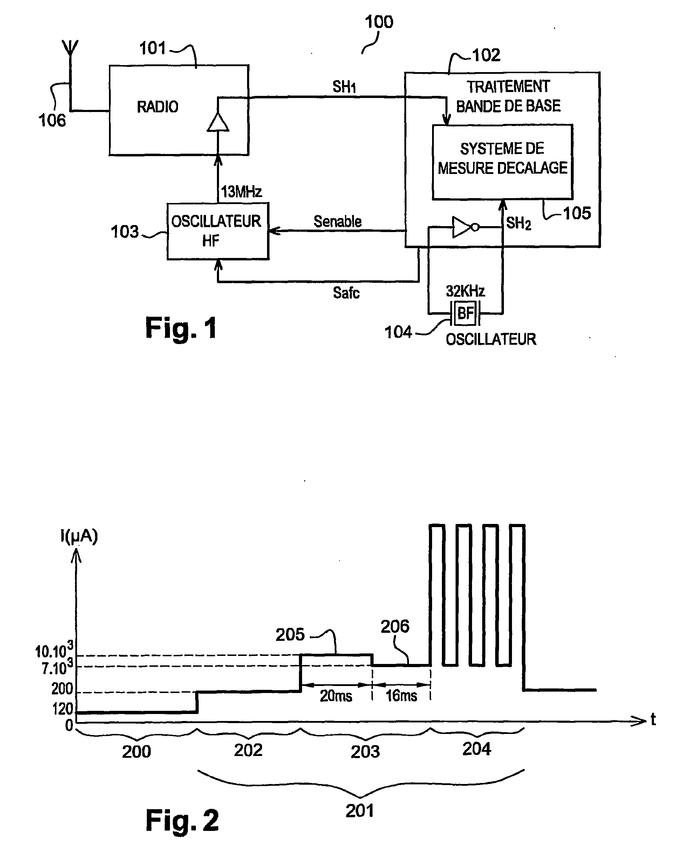

Les constructeurs de téléphone, gênés par la consommation excessive d'un tel oscillateur, se sont massivement tournés vers une architecture faisant intervenir au moins deux oscillateurs. Une représentation schématique d'un exemple d'une telle architecture est donnée à la figure 1.

Sur cette figure, un téléphone mobile 100 comporte, de façon simplifiée, un bloc radio 101 et un bloc de traitement 102 des informations en bande de base. Le bloc radio 101 sert notamment aux différentes opérations d'émission/réception réalisées au moyen du téléphone mobile. Il est relié à une antenne 106. A cet effet, il doit recevoir un signal d'horloge particulièrement précis, qui est fourni par un premier oscillateur à quartz 103, dit oscillateur haute fréquence, délivrant un signal, très stable en température et dans le temps, et de grande pureté spectrale, par exemple à 13 MHz. Le premier oscillateur peut par exemple être du type VCXO (Voltage Controlled Crystal Oscillator en anglais), ou du type VTXCO (Voltage Temperature Controlled Crystal Oscillator en anglais). Dans d'autres exemples de réalisation, le premier oscillateur fournit un signal à 26 MHz.

Le bloc bande de base 102 sert notamment à interpréter un ensemble d'informations reçues par le réseau, à démoduler certains signaux reçus...Il reçoit un signal d'horloge fourni par un second oscillateur à quartz 104, qui délivre un signal à une fréquence inférieure à celle du premier oscillateur, typiquement 32 KHz (kiloHertz). Le deuxième oscillateur 104 présente une pureté spectrale, une fréquence plus basse et une stabilité moins bonne que le premier oscillateur, ce qui lui permet notamment de moins consommer. Il est notamment utilisé comme base de temps pour l'horloge calendaire du téléphone mobile.

On distingue essentiellement trois modes d'utilisation d'un téléphone mobile: un premier mode, dit mode arrêt, dans lequel le téléphone est éteint et ne peut pas recevoir d'appel ; un deuxième mode, dit mode de veille, dans lequel un utilisateur du téléphone n'est pas en train de communiquer au moyen de son téléphone, mais dans lequel l'utilisateur est joignable sur son téléphone ; un troisième mode, dit mode de communication, dans lequel l'utilisateur utilise le téléphone pour communiquer. Typiquement, lorsqu'un téléphone mobile est dans le mode de veille, il doit continuer à avoir une activité, dite activité de veille : il doit notamment surveiller son canal de paging, afin de pouvoir être joint en permanence, et assurer des tâches de monitoring, consistant en différentes opérations de mesures et de détection de signaux sur des cellules voisines de celle sur laquelle il est raccordé.

Les phases d'activité du mode de veille du téléphone mobile nécessitent l'utilisation du premier oscillateur 103. Cependant, ces phases d'activité du mode de veille ne sont pas permanentes : les tâches de paging et de monitoring sont périodiques et ont lieu à des instants parfaitement définis. Afin de limiter la consommation en énergie, notamment pendant le mode de veille, on a proposé d'utiliser le premier oscillateur uniquement pendant les phases d'activité du mode de veille où sa haute fréquence était indispensable. Le reste du temps, dans le mode de veille, seul le deuxième oscillateur 104 est utilisé. A cet effet, un signal d'activation/désactivation S_{enable} du premier oscillateur 103 est transmis par le bloc de traitement 102 au premier oscillateur. Ce signal commande la mise en marche et l'arrêt du premier oscillateur 103. Le premier oscillateur 103 reçoit par ailleurs un signal dit de contrôle automatique en fréquence S_{atc} dont le rôle sera détaillé ultérieurement.

Pendant les phases d'inactivité du mode de veille, le deuxième oscillateur assure le maintien de la base de temps pour permettre de garder une synchronisation avec le réseau de radiotéléphonie cellulaire avec lequel le téléphone considéré est relié. En dehors des phases d'activité du mode de veille, il est donc important de savoir quel est le calage en fréquence du deuxième oscillateur 104 par rapport au premier oscillateur 103. A cet effet, on prévoit l'existence d'un système de mesure 105 du décalage du deuxième oscillateur 104 par rapport au premier oscillateur 103. Le système de mesure 105 reçoit donc, pendant que le téléphone mobile est en mode communication, et éventuellement pendant les phases d'activité du mode de veille, un premier signal S_{H1} correspondant au signal émis par le premier oscillateur 103, et un deuxième signal S_{H2} correspondant au signal émis par le deuxième oscillateur 104, pour effectuer par exemple un étalonnage du deuxième signal par le premier signal. On s'affranchit ainsi des dérives du deuxième oscillateur 104, et on dispose donc, pendant les phases d'inactivité du mode de veille, d'un signal d'horloge procurant une base de temps, dont on maîtrise parfaitement les caractéristiques et qui permet de garder une synchronisation avec le réseau.

Le système de mesure 105 et les informations qu'il fournit sont par ailleurs utilisées dans des phases de préparation aux phases d'activités dans le mode de veille. En effet, pour que le premier oscillateur puisse fonctionner de façon optimale durant les phases d'activité du mode de veille, il faut prévoir une phase dite de réveil du premier oscillateur, pendant laquelle le premier oscillateur se stabilise, notamment en recalant un certain nombre de compteurs internes du premier oscillateur qui ont été momentanément cadencés à la fréquence du deuxième oscillateur.

### ARRIERE-PLAN TECHNOLOGIQUE DE L'INVENTION

Par ailleurs, on peut considérer la consommation d'un téléphone mobile de l'état de la technique de la façon suivante, illustrée à la figure 2 au moyen d'un chronogramme donnant l'évolution de l'intensité du courant consommé par le téléphone en fonction du temps:

Un premier mode de consommation 200 correspond au mode d'arrêt du téléphone mobile. Dans un tel mode, seul le deuxième oscillateur fonctionne, notamment pour maintenir l'horloge calendaire du téléphone ; sa consommation est typiquement de 20 µA (micro-ampères), auxquels il faut ajouter 100 µA pour la consommation du reste du téléphone. La consommation totale dans le mode d'arrêt est donc de 120 µA.

Un deuxième mode de consommation 201, correspondant au mode de veille du téléphone mobile, peut être divisé en trois phases distinctes :
- une première phase 202, correspondant à une phase d'inactivité du mode de veille, pendant laquelle seul le deuxième oscillateur fonctionne ; dans cette phase, la consommation du téléphone mobile, nécessaire pour alimenter le deuxième oscillateur et pour alimenter différents processeurs et mémoires du téléphone, est typiquement de 200 µA en moyenne; cette consommation est dite consommation basique du téléphone mobile ;
- une deuxième phase 203 pendant laquelle on réactive le premier oscillateur, afin de lui laisser le temps de se stabiliser avant d'être opérationnel pour les différentes opérations de paging et de monitoring ; cette deuxième phase comporte typiquement un premier palier 205, durant environ 20 mS (milli-secondes), pendant lequel la consommation est de 10 mA, puis un second palier 206, durant environ 16 mS, pendant lequel la consommation est de 7 mA, en supplément de la consommation basique ; la contribution de la deuxième phase 203 est donc, en moyenne sur une période de 1 seconde qui correspond à la période moyenne dans le cas du GSM entre les opérations de paging, de 312 µA (=7*16+10*20).
- une troisième phase 204 correspondant à une phase d'activité du mode de veille, pendant laquelle le premier oscillateur fonctionne en étant stabilisé, et pendant laquelle des pics de consommation 207 sont atteints. La contribution moyenne de cette troisième phase est typiquement de l'ordre de 2000 µA.

Dans l'exemple illustré, la consommation moyenne d'un téléphone mobile en veille est donc de l'ordre de 2512 µA. La contribution de la deuxième phase 203 n'est donc pas négligeable en terme de consommation d'énergie.

Le fonctionnement des téléphones mobiles de l'état de la technique n'est donc pas totalement satisfaisant : d'une part, la présence d'un deuxième oscillateur à quartz et d'un système de mesure du décalage entre le premier et le deuxième oscillateur augmente le coût de fabrication du téléphone mobile ; d'autre part, la consommation du téléphone mobile pendant les périodes de veille pourrait encore être améliorée, notamment si on proposait un fonctionnement permettant d'éviter les phases de préparation aux phases d'activités dans le mode de veille.

Dans l'état de la technique, on connaît par ailleurs la demande de brevet PCT publiée sous le numéro WO 98/2189, qui divulgue un oscillateur capable de délivrer un ensemble de fréquences différentes pour s'adapter aux différentes normes de transmission intervenant dans un téléphone mobile de type multi-mode. Mais ce document ne se préoccupe pas de générer, dans un téléphone mobile, une base de temps exploitable dans un mode de veille du téléphone pour limiter la consommation de ce dernier. Nous trouvons un autre exemple dans le document D1:US-B1-6333939 (YU NICHOLAS K ET AL) 25 décembre 2001

### DESCRIPTION GENERALE DE L'INVENTION

La présente invention propose une solution aux problèmes qui viennent d'être mentionnés. L'objet de la présente invention est notamment de proposer un procédé de génération de base de temps dans un téléphone mobile dans lequel on ne fait intervenir qu'un oscillateur haute fréquence, typiquement 13 MHz, l'oscillateur basse fréquence, typiquement 32 KHz, ayant été supprimé. La suppression de l'utilisation de l'oscillateur basse fréquence permet ainsi de se dispenser de la présence d'un système de calage de l'oscillateur basse fréquence par rapport à l'oscillateur haute fréquence. De plus, des économies substantielles sont ainsi réalisées dans la fabrication du téléphone mobile. On revient ainsi à une architecture initiale dans laquelle seul un oscillateur haute fréquence était utilisé pour générer une base de temps dans un téléphone mobile. Mais dans l'invention, afin de limiter la consommation d'un téléphone mobile qui n'est pas dans un mode de communication, on prévoit la définition de différents modes de fonctionnement, chaque mode de fonctionnement étant associé à un mode d'alimentation spécifique du système de génération de base de temps, le téléphone mobile passant d'un mode d'alimentation à l'autre en fonction de ses conditions d'activité.

L'invention concerne donc essentiellement un procédé de génération d'une base de temps, dans un téléphone mobile comportant un oscillateur haute fréquence produisant un signal de base à une première fréquence, caractérisé en ce qu'il comporte les différentes étapes consistant à alterner, en fonction des conditions d'activité du téléphone mobile, différents modes de fonctionnement:
- un premier mode de fonctionnement du téléphone mobile, correspondant à une phase d'activité du mode de veille du téléphone mobile, consistant à alimenter au moyen d'un premier niveau d'alimentation l'oscillateur haute fréquence et à alimenter un amplificateur de puissance associé à l'oscillateur haute fréquence pour amplifier le signal de base afin d'obtenir un signal de base amplifié ;
- un deuxième mode de fonctionnement du téléphone mobile, correspondant à une phase d'inactivité du mode de veille du téléphone mobile, consistant à alimenter au moyen du premier niveau d'alimentation l'oscillateur haute fréquence sans alimenter l'amplificateur de puissance ;
et en ce que le premier et le deuxième mode de fonctionnement comportent l'opération supplémentaire consistant à produire, à partir du signal de base non amplifié produit par l'oscillateur haute fréquence, un signal secondaire à une deuxième fréquence.

Une autre caractéristique essentielle du procédé selon l'invention est que lesdites étapes mettent de plus en oeuvre, lors d'une période d'arrêt du téléphone mobile, un troisième mode de fonctionnement du téléphone mobile, consistant à alimenter au moyen d'un deuxième niveau d'alimentation, inférieur au premier niveau d'alimentation, l'oscillateur haute fréquence sans alimenter l'amplificateur de puissance, et comportant l'opération supplémentaire consistant à produire, à partir du signal de base produit par l'oscillateur haute fréquence, un signal secondaire à ladite deuxième fréquence. Dans l'invention, dans les modes de veille et d'arrêt du téléphone mobile, on utilise uniquement ces modes de fonctionnement; on ne prévoit pas d'autres modes de fonctionnement que les trois modes de fonctionnement qui viennent d'être mentionnés. Aucun mode de fonctionnement supplémentaire, notamment pour préparer les phases d'activité du mode de veille, ne sont nécessaires dans l'invention.

Le procédé selon l'invention comporte avantageusement une ou plusieurs caractéristiques supplémentaires, parmi les suivantes:
- le deuxième niveau d'alimentation est égal à la moitié du premier niveau d'alimentation, à 40 pour cent près;
- le signal secondaire est produit au moyen d'un diviseur de fréquence recevant en entrée le signal de base non amplifié ;
- le diviseur introduit une perte de pureté spectrale entre le signal de base et le deuxième signal ;
- le signal de base est de fréquence 13 MHz, ou d'une fréquence multiple ;
- le deuxième signal est de fréquence 32,768 KHz ;
- le diviseur de fréquence de 13 MHz vers 32.768 KHz est intégré dans le même circuit que l'oscillateur à 13 MHz.

L'invention et ses différentes applications seront mieux comprises à la lecture de la description qui suit et à l'examen de la figure qui l'accompagne.

### BREVE DESCRIPTION DE LA FIGURE

Celles-ci ne sont présentées qu'à titre indicatif et nullement limitatif de l'invention. Les figures montrent :
- à la figure 1, déjà décrite, une représentation schématique d'une architecture d'un téléphone mobile de l'état de la technique ;
- à la figure 2, également déjà décrite, un chronogramme illustrant différentes phases de consommation d'un téléphone mobile de l'état de la technique.
- à la figure 3, une représentation schématique des différents modes de fonctionnement d'un système de génération d'une base de temps, mis en oeuvre dans le procédé selon l'invention ;
- à la figure 4, un chronogramme illustrant différentes phases de consommation d'un téléphone mobile mettant en oeuvre le procédé selon l'invention.

### DESCRIPTION DES FORMES DE REALISATION PREFEREES DE L'INVENTION

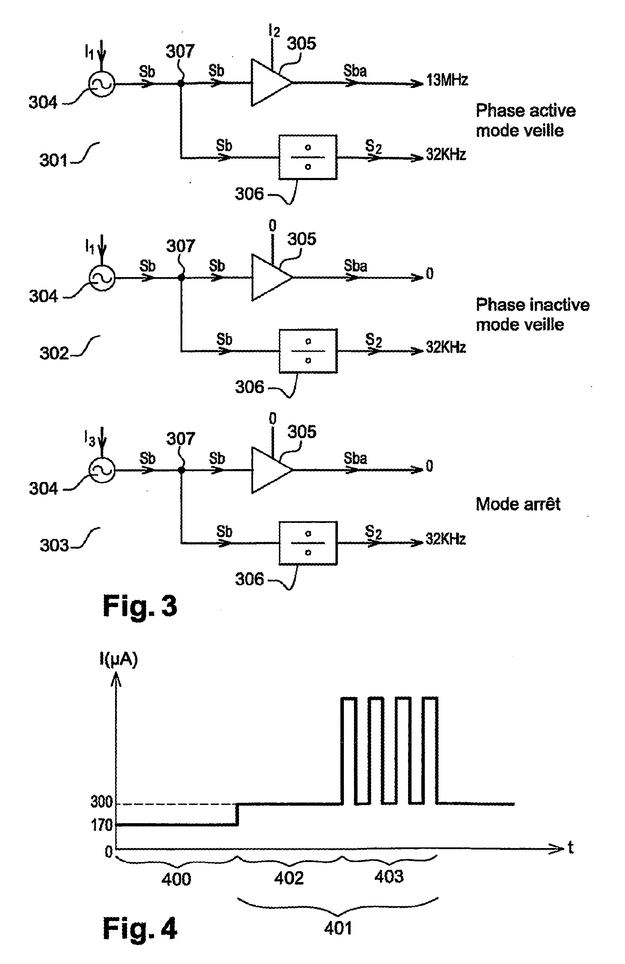

La figure 3 montre un premier mode de fonctionnement 301, un deuxième mode de fonctionnement 302 et un troisième mode de fonctionnement 303 d'un système de génération d'une base de temps, qui sont mis en oeuvre alternativement, en fonction des conditions d'activité du téléphone mobile, dans le procédé selon l'invention.

Le système de génération de base de temps comporte essentiellement :
- un oscillateur à quartz 304, capable de délivrer un signal de base haute fréquence Sb très stable et d'une grande pureté spectrale ; dans un exemple, le signal de base est de fréquence 13 MHz.
- un amplificateur de puissance 305, auquel est transmis le signal de base Sb, et qui fournit un signal de base amplifié Sba, également très stable et de grande pureté spectrale ;
- un diviseur de fréquence 306, qui reçoit à son entrée le signal de base Sb non amplifié, détourné au niveau d'une dérivation 307; le diviseur de fréquence 306 permet d'obtenir un deuxième signal S2 de fréquence inférieure à la fréquence du signal de base, par exemple 32 KHz (32,768 KHz dans la pratique). Afin de limiter le coût de fabrication du téléphone mobile, le diviseur de tension peut être relativement rudimentaire, la pureté spectrale du deuxième signal S2 n'étant alors pas aussi bonne que celle du signal de base Sb. Le ratio 13MHz/32,768 KHz n'étant pas entier, le diviseur 306 est avantageusement du type fractionnaire. Il peut par exemple être réalisé au moyen d'un rang de division multiplexé temporellement : par exemple, la première fréquence 13 MHz est divisée pendant une première durée par 396, puis pendant une seconde durée par 397.

La consommation de la partie qui génère le 32KHz est faible car l'ensemble est situé dans un circuit intégré pour lequel les impédances de travail sont très fortes (dizaine de kilo ohms et dixième de pico farads). Seules la sortie à basse fréquence 32KHz est présente à l'extérieur du circuit et permet d'attaquer des impédances relativement faibles (de l'ordre du kilo ohms et du pico farad) sans créer une consommation élevée.

Le premier mode de fonctionnement 301 correspond à la condition d'activité suivante du téléphone : phase d'activité du mode de veille. Pendant un tel mode de fonctionnement, qui correspond aux opérations de paging et de monitoring précédemment décrites, le téléphone a besoin d'une base de temps stable et de grande pureté spectrale. A cet effet, on alimente l'oscillateur 304 au moyen d'un premier niveau d'alimentation, correspondant à un courant I1, suffisant pour que le signal de base Sb soit stable et de grande pureté spectrale. Par exemple, le premier niveau d'alimentation est de 100 µA. Dans ce mode de fonctionnement, on alimente également l'amplificateur de puissance 305, qui reçoit un courant d'intensité 12, typiquement 2 mA (milliampère). Le signal de base peut ainsi attaquer dans de bonnes conditions une impédance relativement faible.

Le deuxième mode de fonctionnement 302 correspond à la condition d'activité suivante du téléphone : phase d'inactivité du mode de veille. Pendant un tel mode de fonctionnement, qui correspond aux périodes situées entre les opérations de paging et de monitoring précédemment décrites, seul le deuxième signal S2 est nécessaire pour produire une base de temps. Dans l'invention, on propose donc de couper l'alimentation de l'amplificateur de puissance 305, mais on maintient le premier niveau d'alimentation pour alimenter l'oscillateur 304. On limite ainsi la consommation du système de génération de la base de temps, tout en préservant la stabilité fréquentielle du système : en effet, le fait de maintenir le premier niveau d'alimentation pour alimenter l'oscillateur 304 assure le maintien d'une bonne stabilité en fréquence, et les phases de stabilisation de l'oscillateur 304 à chaque redémarrage de ce dernier n'ont plus lieu d'être ; par ailleurs, on rend ainsi inutiles les opérations de calibrage, indispensables dans l'état de la technique, du deuxième signal par rapport au signal de base avant les phases d'activité.

Le troisième mode de fonctionnement 303 correspond à la condition d'activité suivante du téléphone : mode d'arrêt. Pendant un tel mode de fonctionnement, la stabilité fréquentielle du système de génération de la base de temps ne doit pas nécessairement être préservée. Dans un tel mode, on peut donc modifier le mode de fonctionnement de l'oscillateur 304 afin d'en réduire la consommation : à cet effet, on alimente l'oscillateur 304 au moyen d'un deuxième niveau d'alimentation, correspondant à un courant I3 d'intensité inférieure au courant I1. On modifie ainsi le point de polarisation d'un oscillateur. Le signal de base Sb est alors moins stable et de moins grande pureté spectrale que dans le premier mode de fonctionnement. Par exemple, le deuxième niveau d'alimentation est de 50 µA. Dans ce mode de fonctionnement, l'amplificateur de puissance 305 n'est pas non plus alimenté.

Ainsi, on peut considérer la consommation d'un téléphone mobile utilisant le procédé selon l'invention de la façon suivante, illustrée à la figure 4 au moyen d'un chronogramme donnant l'évolution de l'intensité du courant consommé par le téléphone en fonction du temps:

Un premier mode de consommation 400 correspond au mode d'arrêt du téléphone mobile, c'est à dire au troisième mode de fonctionnement 303. Dans un tel mode, l'oscillateur 304 est alimenté typiquement par un courant d'intensité 50 µA ; sa consommation totale est typiquement de 70 µA, auxquels il faut ajouter 100 µA pour la consommation du reste du téléphone. La consommation moyenne totale dans le mode d'arrêt est donc de 170 µA.

Un deuxième mode de consommation 401, correspondant au mode de veille du téléphone mobile, peut être divisé en deux phases distinctes :
- une première phase 402, correspondant au deuxième mode de fonctionnement 302; pendant cette phase, la consommation basique du téléphone mobile, nécessaire pour alimenter l'oscillateur 304 et pour alimenter différents processeurs et mémoires du téléphone, est typiquement de 300 µA en moyenne;
- une deuxième phase 403, correspondant au premier mode de fonctionnement 301, pendant laquelle l'oscillateur 304 fonctionne de façon stable, et pendant laquelle l'amplificateur de puissance 305 est alimenté. Des pics de consommation 404 sont atteints. La contribution moyenne de cette troisième phase est typiquement de l'ordre de 2000 µA, comme auparavant.

Dans l'exemple illustré correspondant à une mise en oeuvre du procédé selon l'invention, la consommation moyenne d'un téléphone mobile en veille est donc, en moyenne sur une période de 1 seconde qui correspond à la période moyenne dans le cas du GSM entre les opérations de paging, de l'ordre de 2300 (=300 + 2000) µA. Grâce au procédé selon l'invention, on a donc réduit la consommation moyenne d'un téléphone mobile en veille, notamment grâce à la disparition d'une phase de stabilisation de l'oscillateur haute fréquence, qui précédait les phases d'activité du mode de veille.

La consommation du téléphone mobile à l'arrêt est légèrement supérieure à la situation de l'état de la technique (170 µA au lieu de 120 µA), mais ceci n'est pas pénalisant, le téléphone conservant une autonomie à l'arrêt de l'ordre de 3 mois avant que sa batterie ne soit totalement déchargée.

## Revendications

1. Procédé de génération d'une base de temps, dans un téléphone mobile comportant un oscillateur (304) haute fréquence produisant un signal de base (Sb) à une première fréquence, **caractérisé en ce qu'**il comporte les différentes étapes consistant à alterner, en fonction des conditions d'activité du téléphone mobile, différents modes de fonctionnement:
- un premier mode de fonctionnement (301) du téléphone mobile, correspondant à une phase d'activité du mode de veille du téléphone mobile, consistant à alimenter au moyen d'un premier niveau d'alimentation (I1) l'oscillateur haute fréquence (304) et à alimenter un amplificateur de puissance (305) associé à l'oscillateur haute fréquence (304) pour amplifier le signal de base (Sb) afin d'obtenir un signal de base amplifié (Sba);
- un deuxième mode de fonctionnement (302) du téléphone mobile, correspondant à une phase d'inactivité du mode de veille du téléphone mobile, consistant à alimenter au moyen du premier niveau d'alimentation (I1) l'oscillateur haute fréquence (304) sans alimenter l'amplificateur de puissance (305);
et **en ce que** le premier et le deuxième mode de fonctionnement comportent l'opération supplémentaire consistant à produire, à partir du signal de base (Sb) produit par l'oscillateur haute fréquence (304), un signal secondaire (S2) à une deuxième fréquence.

2. Procédé selon la revendication précédente, **caractérisé en ce que** lesdites étapes mettent de plus en oeuvre, lors d'une période d'arrêt du téléphone mobile, un troisième mode de fonctionnement (303) du téléphone mobile, consistant à alimenter au moyen d'un deuxième niveau d'alimentation (13), inférieur au premier niveau d'alimentation (I1), l'oscillateur haute fréquence (304) sans alimenter l'amplificateur de puissance (305), et **en ce que** ledit troisième mode comporte l'opération supplémentaire consistant à produire, à partir du signal de base (Sb) produit par l'oscillateur haute fréquence (304), un signal secondaire (S2) à ladite deuxième fréquence

3. Procédé selon la revendication précédente **caractérisé en ce que** le deuxième niveau d'alimentation (I3) est égal à la moitié du premier niveau d'alimentation (I1), à 40 pour cent près.

4. Procédé selon l'une au moins des revendications précédentes **caractérisé en ce que** le signal secondaire (S2) est produit au moyen d'un diviseur de fréquence (306) recevant en entrée le signal de base (Sb).

5. Procédé selon la revendication précédente **caractérisé en ce que** le diviseur (306) introduit une perte de pureté spectrale entre le signal de base (Sb) et le deuxième signal (S2).

6. Procédé selon l'une au moins des revendications précédentes **caractérisé en ce que** le signal de base (Sb) est de fréquence 13 MHz, ou d'une fréquence multiple.

7. Procédé selon l'une au moins des revendications précédentes **caractérisé en ce que** le deuxième signal (S2) est de fréquence 32, 768 KHz

8. Procédé selon les revendications 5, 6 et 7 **caractérisé en ce que** le diviseur de fréquence de 13MHz vers 32,768KHz est intégré dans le même circuit que l'oscillateur à 13MHz.

## Claims

1. A method for generating a time base in a mobile telephone including a high-frequency oscillator (304) producing a base signal (Sb) at a first frequency, **characterised in that**
it includes the various stages consisting of switching between different functional modes depending on the activity conditions of the mobile telephone:
- a first functional mode (301) of the mobile telephone, corresponding to an activity phase in the standby mode of the device, consisting of supplying power via a first supply level (I1) of the high-frequency oscillator (304) and supplying power to a power amplifier (305) associated with the high-frequency oscillator (304) for amplifying the base signal (Sb) in order to obtain an amplified base signal (Sba);
- a second functional mode (302) of the mobile telephone, corresponding to an inactivity phase in the standby mode of the device, consisting of supplying power via the first supply level (I1) of the high-frequency oscillator (304) but without supplying power to the power amplifier (305);
and **in that** the first and second functional modes include the additional operation consisting of generating a secondary signal (S2) at a second frequency from the base signal (Sb) that is produced by the high-frequency oscillator (304).

2. The method as recited in the preceding claim,
**characterised in that**
the steps also implement a third functional mode (303) of the mobile telephone during a stop period of the device, consisting of supplying power to the high-frequency oscillator (304) via a second power supply level (I3), lower than the first power supply level (I1), without supplying power to the power amplifier (305), and **in that** this third mode includes the additional operation consisting of generating a secondary signal (S2) at the second frequency from the base signal (Sb) that is produced by the high-frequency oscillator (304).

3. The method as recited in the preceding claim,
**characterised in that**
the second power supply level (13) is equal to half of the first power supply level (I1), at approximately 40 percent thereof.

4. The method as recited in at least one of the preceding claims,
**characterised in that**
the secondary signal (S2) is produced by a frequency splitter (306) that receives the base signal (Sb) at its input.

5. The method as recited in the preceding claim,
**characterised in that**
the splitter (306) introduces a loss of spectral purity between the base signal (Sb) and the second signal (S2).

6. The method as recited in at least one of the preceding claims,
**characterised in that**
the base signal (Sb) has a frequency of 13 MHz or a multiple frequency.

7. The method as recited in at least one of the preceding claim,
**characterised in that**
the second signal (S2) has a frequency of 32.768 KHz.

8. The method as recited in claims 5, 6 and 7,
**characterised in that**
the frequency splitter from 13 MHz to 32.768 KHz is integrated in the same circuit as the 13 MHz oscillator.

## Patentansprüche

1. Verfahren zur Erzeugung einer Zeitbasis in einem Mobiltelefon, umfassend einen Hochfrequenzoszillator (304), der ein Basissignal (Sb) mit einer ersten Frequenz erzeugt, **dadurch gekennzeichnet, dass** es die verschiedenen Schritte umfasst, die darin bestehen, in Abhängigkeit von den Aktivitätsbedingungen des Mobiltelefons verschiedene Betriebsarten abzuwechseln:
- eine erste Betriebsart (301) des Mobiltelefons, die einer Aktivitätsphase des Einschaltmodus des Mobiltelefons entspricht und darin besteht, mit Hilfe eines ersten Versorgungsniveaus (11) den Hochfrequenzoszillator (304) zu versorgen und einen Leistungsverstärker (305), der mit dem Hochfrequenzoszillator (304) verbunden ist, zu versorgen, um das Basissignal (Sb) zu verstärken, um ein verstärktes Basissignal (Sba) zu erhalten;
- eine zweite Betriebsart (302) des Mobiltelefons, die einer Inaktivitätsphase des Einschaltmodus des Mobiltelefons entspricht und darin besteht, mit Hilfe eines ersten Versorgungsniveaus (11) den Hochfrequenzoszillator (304) zu versorgen, ohne den Leistungsverstärker (305) zu versorgen;
und dass die erste und die zweite Betriebsart den zusätzlichen Schritt umfassen, der darin besteht, aus dem vom Hochfrequenzoszillator (304) erzeugten Basissignal (Sb) ein Nebensignal (S2) mit einer zweiten Frequenz zu erzeugen.

2. Verfahren nach dem vorhergehenden Anspruch, **dadurch gekennzeichnet; dass** die Schritte ferner während einer Unterbrechungsphase des Mobiltelefons eine dritte Betriebsart (303) des Mobiltelefons einsetzen, die darin besteht, mit Hilfe eines zweiten Versorgungsniveaus (13), das geringer als das erste Versorgungsniveau (11) ist, den Hochfrequenzoszillator (304) zu versorgen, ohne den Leistungsverstärker (305) zu versorgen, und dass die dritte Betriebsart den zusätzlichen Schritt umfasst, der darin besteht, aus dem vom Hochfrequenzoszillator (304) erzeugten Basissignal (Sb) ein Nebensignal (S2) mit der zweiten Frequenz zu erzeugen.

3. Verfahren nach dem vorhergehenden Anspruch, **dadurch gekennzeichnet, dass** das zweite Versorgungsniveau (13) gleich der Hälfte des ersten Versorgungsniveaus (11) auf 40 Prozent genau ist.

4. Verfahren nach mindestens einem der vorhergehenden Ansprüche, **dadurch gekennzeichnet, dass** das Nebensignal (S2) mit Hilfe eines Frequenzteilers (306) erzeugt wird, der am Eingang das Basissignal (Sb) empfängt.

5. Verfahren nach dem vorhergehenden Anspruch, **dadurch gekennzeichnet, dass** der Frequenzteiler (306) einen Verlust an Spektralreinheit zwischen dem Basissignal (Sb) und dem zweiten Signal (S2) einleitet.

6. Verfahren nach mindestens einem der vorhergehenden Ansprüche, **dadurch gekennzeichnet, dass** das Basissignal (Sb) eine Frequenz von 13 MHz oder eine Mehrfachfrequenz hat.

7. Verfahren nach mindestens einem der vorhergehenden Ansprüche, **dadurch gekennzeichnet, dass** das zweite Signal (S2) eine Frequenz von 32,768 KHz hat.

8. Verfahren nach den Ansprüchen 5, 6 und 7, **dadurch gekennzeichnet, dass** der Frequenzteiler von 13 MHz zu 32,768 KHz in dieselbe Schaltung wie der Oszillator 13 MHz integriert ist.
